Europäisches Patentamt

European Patent Office

Office européen des brevets

(11) Numéro de publication: **0 513 731 A1**

## DEMANDE DE BREVET EUROPEEN

(21) Numéro de dépôt: **92107975.2**

(22) Date de dépôt: **12.05.92**

(51) Int. Cl.⁵: **H01B 3/44**, C08L 23/06

(30) Priorité: **13.05.91 FR 9105755**

(43) Date de publication de la demande:
**19.11.92 Bulletin 92/47**

(84) Etats contractants désignés:
**CH DE FR GB IT LI SE**

(71) Demandeur: **ALCATEL CABLE**
**30, rue des Chasses**
**F-92111 Clichy Cédex(FR)**

(72) Inventeur: **Barraud, Jean-Yves**
**145, boulevard de Magenta**
**F-75010 Paris(FR)**
Inventeur: **Clinet, Jean-Claude**
**c/o CNRS, 15, Ouai Anatole France**
**F-75007 Paris(FR)**
Inventeur: **Fauvarque, Jean-Français**
**6, rue Joseph Bara**
**F-75006 Paris(FR)**
Inventeur: **Gadessaud, Robert**
**c/o ALCATEL ALSTHOM RECHERCHE, route**
**de Nozay**
**F-91460 Marcoussis(FR)**
Inventeur: **Janah, Hakim**
**36, rue Le Brun**
**F-75013 Paris(FR)**

(74) Mandataire: **Weinmiller, Jürgen et al**
**Lennéstrasse 9 Postfach 24**
**W-8133 Feldafing(DE)**

(54) **Matériau synthétique d'isolation électrique pour câble d'énergie à haute tension.**

(57) Matériau synthétique d'isolation électrique pour câble d'énergie haute tension, notamment mais non exclusivement en courant continu, caractérisé par le fait qu'il est constitué d'un alliage de polymères obtenu à partir d'un mélange d'un premier et d'un second polymères, mélange auquel est ajouté un copolymère,
- ledit premier polymère étant choisi parmi les polyoléfines, telles que les polyéthylènes, les polypropylènes, et leurs copolymères, tels que l'EPDM,
- ledit second polymère étant incompatible avec ledit premier polymère, et se trouvant dans une proportion inférieure à 40% en poids dudit mélange, et étant choisi parmi les polyoléfines thermoplastiques, telles que les polypropylènes, les polyéthylènes, et leurs copolymères, les polymères vinyliques tels que le polystyrène, les polyamides, les polyesters, tels que le poyéthyltéréphtalate, les polycarbonates,
- ledit copolymère ayant au moins un monomère constitutif susceptible d'assurer la compatibilité dudit second polymère avec ledit premier polymère, la proportion dudit copolymère étant comprise entre 1% et 20% en poids dudit mélange.

La présente invention concerne un matériau synthétique d'isolation électrique pour câble d'énergie sous haute tension, notamment mais non exclusivement en courant continu.

Le transport d'énergie par câbles en courant continu présente plusieurs avantages (puissance élevée et faibles pertes électriques) par rapport au transport par câbles en courant alternatif, lorsque les distances atteignent ou dépassent 50 km.

Les câbles utilisés actuellement pour le courant continu sont isolés au papier imprégné d'huile fluide ou visqueuse. Cette technologie est fiable mais lourde, tant en raison des conditions de fabrication et de pose que d'exploitation (poids, maintenance périodique, etc...).

Les matériaux isolants synthétiques, largement utilisés pour les câbles en courant alternatif, sont attrayants au niveau de la pose, de l'exploitation et de l'entretien et justifient des études entreprises depuis vingt-cinq ans. Les principaux matériaux macromoléculaires utilisés en câblerie haute tension alternative sont les polyéthylènes réticulés ou non et les caoutchoucs de type EPR. Aujourd'hui aucun câble à isolation synthétique extrudée n'est commercialisé pour le courant continu haute tension. En effet, la haute tension continue induit des charges d'espace permanentes qui évoluent dans le temps. Cette évolution peut provoquer localement des augmentations importantes de champ électrique et conduire à des claquages.

La présente invention a pour but de réaliser un matériau synthétique d'isolation, extrudable, qui présente de bonnes propriétés mécaniques, qui soit stable dans le temps, et qui possède des qualités diélectriques aux températures de fonctionnement des câbles, meilleures que celles des matériaux connus.

La présente invention a pour objet un matériau synthétique d'isolation électrique pour câble d'énergie haute tension, notamment mais non exclusivement en courant continu, caractérisé par le fait qu'il est constitué d'un alliage de polymères obtenu à partir d'un mélange d'un premier et d'un second polymères, mélange auquel est ajouté un copolymère,

- ledit premier polymère étant choisi parmi les polyoléfines, telles que les polyéthylènes, les polypropylènes, et leurs copolymères, tels que l'EPDM,
- ledit second polymère étant incompatible avec ledit premier polymère, et se trouvant dans une proportion inférieure à 40% en poids dudit mélange, et étant choisi parmi les polyoléfines thermoplastiques, telles que les polypropylènes, les polyéthylènes, et leurs copolymères, les polymères vinyliques tels que le polystyrène, les polyamides, les polyesters, tels que le polyéthyltéréphtalate, les polycarbonates,
- ledit copolymère, ayant au moins un monomère constitutif susceptible d'assurer la compatibilité dudit second polymère avec ledit premier polymère, la proportion dudit copolymère étant comprise entre 1% et 20% en poids dudit mélange.

Ledit copolymère peut être un copolymère séquencé dibloc à transition graduelle ou non ou tribloc, dont un premier bloc est constitué par des motifs monomères identiques à ceux dudit premier polymère, et dont un second bloc est constitué par des motifs monomères identiques à ceux dudit second polymère.

Ledit copolymère peut être également obtenu par réaction chimique de greffage de molécules dudit premier/ou dudit second polymère, sur une chaîne macromoléculaire compatible avec ledit second/ou ledit premier polymère.

Ce greffage peut être aussi réalisé au moment du mélange des divers constituants.

Ledit second polymère qui constitue normalement une phase distincte lorsqu'il est en mélange avec ledit premier polymère, est choisi fusible, ou soluble dans un solvant du premier polymère, de façon à pouvoir être mis en mélange avec ce premier polymère et ledit copolymère.

De façon préférentielle, la fabrication dudit alliage est réalisée à une température telle que tous les constituants soient visqueux. Ces derniers doivent être thermiquement stables aux températures utilisées pour la préparation de l'alliage ou pour son extrusion.

Selon un premier mode de réalisation selon l'invention, ledit premier polymère est un polyéthylène basse densité, ou un polyéthylène basse densité linéaire, ledit second polymère est un polyéthylène haute densité et ledit copolymère est un copolymère de polyéthylène et d'EPDM.

Selon un second mode de réalisation selon l'invention, ledit premier polymère est un polyéthylène basse densité, ou un polyéthylène basse densité linéaire, ou un polyéthylène haute densité, ledit second polymère est un polystyrène et ledit copolymère est choisi parmi un copolymère séquencé tribloc ou dibloc, à transition graduelle ou non, de polybutadiène hydrogéné et de polystyrène, et un copolymère greffé de polybutadiène hydrogéné et de polystyrène.

Selon un troisième mode de réalisation selon l'invention, ledit premier polymère est un polyéthylène, ledit second polymère est un polypropylène et ledit copolymère est l'EPDM.

Selon un quatrième mode de réalisation selon l'invention, ledit premier polymère est un polyéthylène, ledit second polymère est un polyamide et ledit copolymère est choisi parmi un copolymère polyéthylène-polyméthacrylate de méthyle partiellement hydrolysé, un copolymère séquencé de polybutadiène hydrogé-

2

né et de polycaprolactame, et un copolymère composé d'une polyoléfine greffée à l'anhydride maléique.

Selon un cinquième mode de réalisation selon l'invention, ledit premier polymère est un polyéthylène, ledit second polymère un polyester et ledit copolymère est un copolymère séquencé ou greffé de polybutadiène hydrogéné et de polyester.

Selon un sixième mode de réalisation selon l'invention, ledit premier polymère est un polyéthylène, ledit second polymère un polycarbonate et ledit copolymère un copolymère greffé de polyéthylène et de polycarbonate.

L'alliage de polymères selon l'invention peut être réticulé ou non. Il est extrudable.

Grâce au copolymère compatibilisant, la morphologie de cet alliage est stable dans le temps et il présente de bonnes propriétés mécaniques. En outre l'alliage selon l'invention permet d'éviter les phénomènes de claquage intempestif habituellement observés dans les matériaux d'isolation synthétiques extrudables, quand on tente de les utiliser pour réaliser des câbles de transport de courant continu sous haute tension.

On constate en effet que, de manière surprenante, la quantité de charges électriques dans l'alliage est inférieure à celle qui est induite dans chacun des matériaux. Le courant de dépolarisation, mesuré au moment où le champ électrique est annulé, caractérise la quantité des charges induites. Ce courant de dépolarisation s'est avéré être plus faible et plus rapidement nul dans les alliages selon l'invention que dans chacun de ses polymères constituants pris isolément.

On constate par ailleurs que, dans les câbles haute tension à courant alternatif, la mise en oeuvre d'un alliage selon l'invention permet d'allonger la durée de vie de l'isolant. En effet, la diminution des charges induites entraîne une diminution de la dispersion des tensions de claquage.

D'autres caractéristiques et des avantages de la présente invention apparaîtront au cours de la description suivante d'exemples de réalisation donnés à titre illustratif mais nullement limitatif.

**EXEMPLE 1** - Mélanges et alliages - Polyéthylène/Polystyrène.

On réalise six matériaux comprenant comme premier polymère du polyéthylène et comme second polymère du polystyrène.

Selon les cas, on a du polyéthylène basse densité (LDPE), du polyéthylène basse densité linéaire (LLDPE) et du polyéthylène haute densité (HDPE).

Les matériaux numérotés 1, 3 et 5 dans le tableau I sont des mélanges de ces deux polymères qui sont incompatibles et ne font pas partie de l'invention.

Les matériaux selon l'invention numérotés 2, 4 et 6 dans le tableau I comportent en outre un copolymère séquencé de polybutadiène hydrogéné et de polystyrène, comme par exemple le copolymère vendu sous la marque "KRATON" par la Société SHELL.

Pour chaque matériau un mélange de 100 grammes a été préparé dans un mélangeur de laboratoire à cylindres à une température de 200°C. Des plaques de 18 x 8 x 0,1 cm sont ensuite obtenues par moulage à chaud. Des éprouvettes de traction sont découpées et examinées.

Le tableau I mentionne les pourcentages en poids des divers constituants de chaque matériau ainsi que les valeurs de la contrainte à la rupture $\sigma_\beta$ (en MPa) et l'allongement à la rupture $\epsilon_\beta$ (%) à une température égale à 25°C.

**TABLEAU 1**

| Référence du matériau | Nature et % de polyéthylène | | | % de polystyrène | % de copolymère | propriétés mécaniques à 25°C | |
|---|---|---|---|---|---|---|---|
| | LLDPE | LLDPE | HDPE | | | $\sigma B$(MPa) | $\varepsilon B$(%) |
| Mélange 1 | 80 | | | 20 | | 11,0 +- 2,0 | 30+- 20 |
| Alliage 2 | 80 | | | 20 | 10 | 18,0 +- 1,0 | 465+- 40 |
| Mélange 3 | | 80 | | 20 | | 20,0 +- 2,0 | 925+- 60 |
| Alliage 4 | | 80 | | 20 | 10 | 26,0 +- 0,5 | 830+- 10 |
| Mélange 5 | | | 80 | 20 | | 32,0 +- 4,0 | <3 |
| Alliage 6 | | | 80 | 20 | 10 | 29,0 +- 0,5 | 615+- 50 |

**EXEMPLE 2** - Mélanges et alliages - Polyéthylène/Polyamide 6

On a réalisé huit matériaux comprenant comme premier polymère du polyéthylène et comme second polymère du polyamide 6.

Les matériaux numérotés 7, 9, 11 et 13 du tableau II sont des mélanges de ces deux polymères qui sont incompatibles, et ne font pas partie de l'invention. Les matériaux selon l'invention numérotés 8, 10, 12 et 14 du tableau II comportent en outre un copolymère de polybutadiène hydrogéné et de polycaprolactame, ou un copolymère composé d'une polyoléfine greffée à l'anhydride maléique, comme par exemple l'"EXXELOR VA 1801" vendu par la Société EXXON.

Pour chaque matériau un mélange de 100 grammes a été préparé dans un mélangeur de laboratoire à cylindres à une température de 245°C. Des plaques de 18 x 8 x 0,1 cm sont ensuite obtenues par moulage à chaud. Des éprouvettes de traction sont découpées et examinées.

Le tableau II mentionne les pourcentages en poids des divers constituants de chaque matériau ainsi que les valeurs de la contrainte à la rupture $\sigma_\beta$ (en MPa) et l'allongement à la rupture $\epsilon_\beta$ (%) à une température égale à 25°C.

TABLEAU II

| Référence du matériau | Nature et % de polyéthylène | | % de polyamide 6 | %de copolymère | propriétés mécaniques à25°C | |
|---|---|---|---|---|---|---|
| | LDPE | LLDPE | | | σB(MPa) | εB(%) |
| Mélange 7 | 80 | | 20 | | 11,0 +- 0,5 | <5 |
| Alliage 8 | 80 | | 20 | 10 | 18,0 +- 2,0 | 450 +- 80 |
| Mélange 9 | 70 | | 30 | | 12,0 +- 2,0 | <5 |
| Alliage 10 | 70 | | 30 | 10 | 18,0 +- 1,5 | 390 +- 60 |
| Mélange 11 | | 80 | 20 | | 15,0 +- 4,0 | 680 +- 100 |
| Alliage 12 | | 80 | 20 | 10 | 27,5 +- 1,5 | 830 +- 40 |
| Mélange 13 | | 70 | 30 | | 8,0 +- 1,0 | 130 +- 100 |
| Alliage 14 | | 70 | 30 | 10 | 26,0 +- 1,0 | 620 +- 40 |

On étudie ensuite les courants de dépolarisation dans un échantillon en polyéthylène basse densité pur (LDPE) et on compare les valeurs à celles obtenues dans les mêmes conditions avec des échantillons du mélange 7 et des alliages 2 et 8 selon l'invention.

La méthode consiste à polariser l'échantillon par application d'une haute tension continue, puis à le dépolariser en mesurant le courant issu de cette dépolarisation en fonction du temps de relaxation. La température est de 70°C, (la migration des charges d'espace est plus rapide à haute température). La tension de polarisation est de 10.000 volts. Chaque échantillon est un disque de 80 mm de diamètre et de 1 mm d'épaisseur. Sa surface est plane et lisse et soigneusement nettoyée avant la mesure. La polarisation est maintenue pendant 72 heures et la dépolarisation dure environ 10 minutes.

Les paramètres permettant la comparaison des performances des échantillons étudiés sont:
- la charge Q écoulée entre 25 et 600 secondes,
- l'intensité résiduelle I après 50 secondes.

Le tableau III mentionne les valeurs $k_1$ et $k_2$ avec :

$$k_1 = \frac{Q \ (LDPE)}{Q \ matériau} \qquad k_2 = \frac{I \ (LDPE)}{I \ matériau}$$

(le matériau étant le mélange ou l'alliage testé)

Ce tableau permet d'évaluer les performances des alliages selon l'invention par rapport au polyéthylène basse densité pur (les propriétés diélectriques des matériaux sont d'autant meilleures que les rapports $k_1$ et $k_2$ sont élevés).

Les résultats du tableau III montrent que les alliages selon l'invention sont nettement meilleurs du point de vue diélectrique que le polyéthylène basse densité pur ou que le simple mélange des deux polymères.

Bien entendu l'invention n'est pas limitée eux modes de réalisation décrits. On pourra, sans sortir du cadre de l'invention, remplacer tout moyen par un moyen équivalent.

TABLEAU III

| Référence du matériau | Composition du matériau | | | | Propriétés électriques à 70°C | |
|---|---|---|---|---|---|---|
| | LDPE | PS | PA6 | %de copolymère | k1 | k2 |
| LDPE | 100 | - | | | 1 | 1 |
| Alliage 2 | 80 | 20 | | 10 | 5,3 | 5 |
| Mélange 7 | 80 | | 20 | | 1,1 | 1,1 |
| Alliage 8 | | 80 | 20 | 10 | 6,7 | 4,6 |

Par ailleurs le matériau selon l'invention peut être également utilisé avantageusement en courant alternatif.

Ainsi on a réalisé trente échantillons en forme de films à partir de l'alliage n° 3 selon l'invention (voir tableau I) et trente échantillons analogues en polyéthylène réticulé chimiquement (PRC) selon l'art antérieur, utilisé dans les câbles haute tension alternative actuels.

Des essais de claquage en courant alternatif à température ambiante ont été conduits selon la procédure décrite dans la norme internationale CEI 243-1 relative aux essais électriques sur les diélectriques solides.

La vitesse de montée au claquage était de 2000V/sec.

Les résultats obtenus en essais de claquage obéissent à une distribution de probalité de WEIBULL: P-(t,E), de la forme:

8

$$P (t,E) = 1 - \exp \left[ -\left(\frac{t}{to}\right)^a \left(\frac{E}{Eo}\right)^b \right]$$

E : gradient de claquage,

to: valeur nominale de la durée de vie sous la contrainte Eo,

a = paramètre de forme du temps,

b = paramètre de fome du champ électrique.

Le paramètre b est un estimateur de la dispersion des gradients de claquage. Cette dispersion est d'autant plus faible que b est grand.

Le tableau IV montre l'intérêt d'utiliser un alliage selon l'invention plutôt que le PRC.

TABLEAU IV

| Type de matériau | b |
| --- | --- |
| Alliage n° 2 | 15 |
| PRC | 12 |

L'augmentation du paramètre b permet d'augmenter la durée de vie du matériau d'isolation pour un même gradient de champ électrique de fonctionnement.

**Revendications**

1. Matériau synthétique d'isolation électrique pour câble d'énergie haute tension, notamment mais non exclusivement en courant continu, caractérisé par le fait qu'il est constitué d'un alliage de polymères obtenu à partir d'un mélange d'un premier et d'un second polymères, mélange auquel est ajouté un copolymère,
   - ledit premier polymère étant choisi parmi les polyoléfines, telles que les polyéthylènes, les polypropylènes, et leurs copolymères, tels que l'EPDM,
   - ledit second polymère étant incompatible avec ledit premier polymère, et se trouvant dans une proportion inférieure à 40% en poids dudit mélange, et étant choisi parmi les polyoléfines thermoplastiques, telles que les polypropylènes, les polyéthylènes, et leurs copolymères, les polymères vinyliques tels que le polystyrène, les polyamides, les polyesters, tels que le poyéthyltéréphtalate, les polycarbonates,
   - ledit copolymère ayant au moins un monomère constitutif susceptible d'assurer la compatibilité dudit second polymère avec ledit premier polymère, la proportion dudit copolymère étant comprise entre 1% et 20% en poids dudit mélange.

2. Matériau selon la revendication 1, caractérisé par le fait que ledit copolymère est un copolymère séquencé, dibloc à transition graduelle ou non ou tribloc, dont un premier bloc est constitué par des motifs monomères identiques à ceux dudit premier polymère et dont un second bloc est constitué par des motifs monomères identiques à ceux dudit second polymère.

3. Matériau selon la revendication 1, caractérisé par le fait que ledit copolymère est obtenu par réaction chimique de greffage de molécules dudit premier/ou dudit second polymère, sur une chaîne macromoléculaire compatible avec ledit second ou ledit premier polymère.

4. Matériau selon la revendication 3, caractérisé par le fait que ledit greffage est obtenu lors de la réalisation du mélange de ses divers constituants.

5. Matériau selon la revendication 1, caractérisé par le fait que ledit premier polymère est un polyéthylène basse densité, ou un polyéthylène basse densité linéaire, que ledit second polymère est un polyéthylène haute densité et que ledit copolymère est un copolymère de polyéthylène et d'EPDM.

6. Matériau selon la revendication 1, caractérisé par le fait que ledit premier polymère est un polyéthylène basse densité, ou un polyéthylène basse densité linaire, ou un polyéthylène haute densité, que ledit second polymère est un polystyrène et que ledit copolymère est choisi parmi un copolymère séquencé tribloc ou dibloc à transition graduelle ou non, de polybutadiène hydrogéné et de polystyrène, et un copolymère greffé de polybutadiène hydrogéné et de polystyrène.

7. Matériau selon la revendication 1, caractérisé par le fait que ledit premier polymère est un polyéthylène, ledit second polymère est un polypropylène et ledit copolymère est l'EPDM.

8. Matériau selon la revendication 1, caractérisé par le fait que ledit premier polymère est un polyéthylène, ledit second polymère est un polyamide et ledit copolymère est choisi parmi un copolymère polyéthylène-polyméthacrylate de méthyle partiellement hydrolysé, un copolymère séquencé de polybutadiène hydrogéné et de polycaprolactame, et un copolymère composé d'une polyoléfine greffée à l'anhydride maléique.

9. Matériau selon la revendication 1, caractérisé par le fait que ledit premier polymère est un polyéthylène, ledit second polymère un polyester et ledit copolymère est un copolymère séquencé ou greffé de polybutadiène hydrogéné et de polyester.

10. Matériau selon la revendication 1, caractérisé par le fait que ledit premier polymère est un polyéthylène, ledit second polymère un polycarbonate et ledit copolymère un copolymère greffé de polyéthylène et de polycarbonate.

11. Matériau selon l'une des revendications précédentes, caractérisé par le fait qu'il est réticulé.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 092 318 (EXXON RESEARCH AND ENGINEERING COMPANY)<br>* revendications 1-5 *<br>--- | 1-11 | H01B3/44<br>C08L23/06 |
| Y | EP-A-0 236 918 (BASF AKTIENGESELLSCHAFT)<br>* revendications 1-5 *<br>--- | 1-11 | |
| A | EP-A-0 125 227 (MONTEFINA S.A.)<br>* revendications 1-3 *<br>--- | 1,6 | |
| A | US-A-4 716 197 (SEISS ET AL)<br>--- | 1-4,6 | |
| A | EP-A-0 100 247 (SOCIETE CHIMIQUE DES CHARBONNAGES S.A.)<br>* revendications 1-11 *<br><br>----- | 1-11 | |

**DOMAINES TECHNIQUES RECHERCHES (Int. Cl.5)**

H01B
C08L

Le présent rapport a été établi pour toutes les revendications

| Lieu de la recherche | Date d'achèvement de la recherche | Examinateur |
|---|---|---|
| LA HAYE | 13 AOUT 1992 | GLANDDIER A. |

EPO FORM 1503 03.82 (P0402)